Europäisches Patentamt

European Patent Office

Office européen des brevets

(19)

(11) Veröffentlichungsnummer: **0 214 489 B1**

(12) **EUROPÄISCHE PATENTSCHRIFT**

(45) Veröffentlichungstag der Patentschrift: **10.07.91**

(51) Int. Cl.⁵: **C01B 33/02**, C01B 21/068, C01B 31/36

(21) Anmeldenummer: **86111150.8**

(22) Anmeldetag: **12.08.86**

(54) **Verfahren zur Herstellung von Silicium und dessen Verbindungen in feinstteiliger Form.**

(30) Priorität: **07.09.85 DE 3531948**
**29.03.86 DE 3610713**

(43) Veröffentlichungstag der Anmeldung:
**18.03.87 Patentblatt 87/12**

(45) Bekanntmachung des Hinweises auf die
Patenterteilung:
**10.07.91 Patentblatt 91/28**

(84) Benannte Vertragsstaaten:
**CH DE FR GB IT LI NL SE**

(56) Entgegenhaltungen:
**CH-A- 336 192**
**GB-A- 754 554**

**CHEMICAL ABSTRACTS, Band 65, Nr. 5, August 1966, Spalte 6777b,c,d; Columbus, Ohio, US; V.N. CHECHENTSEV et al.: "Obtaning high purity silicon by vacuum distillation over the subchloride" & SB., MOSK. INST. STALI I SPLAVOV Nr. 41, 281-9 (1966)**

(73) Patentinhaber: **HOECHST AKTIENGESELL-SCHAFT**
**Postfach 80 03 20**
**W-6230 Frankfurt am Main 80(DE)**

(72) Erfinder: **Nielen, Horst-Dieter, Dr.**
**Henriette-Lott-Weg 11**
**W-5030 Hürth(DE)**
Erfinder: **Jödden, Klaus, Dr.**
**Neustrasse 66**
**W-5042 Erftstadt(DE)**
Erfinder: **Heymer, Gero, Dr.**
**Fasanenaue 12**
**W-5042 Erftstadt(DE)**
Erfinder: **May, Christian**
**Berliner Strasse 1**
**W-5042 Erftstadt(DE)**

## Beschreibung

Hochleistungskeramische Werkstoffe finden wegen ihrer besonderen Eigenschaften auf vielen Anwendungsgebieten zunehmendes Interesse. Sie bestehen z.B. aus Oxiden, Carbiden oder Nitriden der Elemente Aluminium, Silicium oder Zirkon, oder aus Aluminiumtitanat oder Titandiborid. Die Herstellung der eigentlichen Werkstücke erfolgt meist mit Hilfe pulvermetallurgischer Verfahren, wozu sehr feinteilige Pulver der genannten Werkstoffe benötigt werden.

Wegen des hohen Festigkeitspotentials auch bei hohen Temperaturen hat neben Siliciumcarbid (SiC) besonders Siliciumnitrid ($Si_3N_4$) eine herausragende Bedeutung. Während SiC-Pulver üblicherweise durch Mahlen von konventionell hergestelltem Siliciumcarbid gewonnen wird, was wegen der hohen Härte des Materials sehr aufwendig ist, sind unterschiedliche Wege zur Herstellung von Siliciumnitrid-Pulver vorgeschlagen worden. Häufig wird versucht, $Si_3N_4$ durch wiederholtes Nitridieren und Mahlen von Silicium herzustellen. Eine andere Möglichkeit besteht in der Umsetzung von Siliciumdioxid mit Kohlenstoff und Stickstoff oder auch in der Reaktion von Siliciumtetrachlorid mit Ammoniak, wobei intermediär Siliciumamid bzw. Siliciumimid gebildet wird.

Den geschilderten Verfahren ist der Nachteil gemeinsam, daß die entstehenden Pulver verunreinigt sind. Der Verunreinigungen stammen entweder aus dem Mahlprozeß oder sind durch nicht vollständig abzutrennende Zwischen- oder Nebenprodukte (z.B. chlorhaltige Verbindungen) oder durch Berührung mit Feuchtigkeit oder Luftsauerstoff bedingt, was im Verlauf der häufig mehrstufigen Operationen kaum zu vermeiden ist. Der Gehalt an Verunreinigungen ist insofern nachteilig, als durch die Verunreinigung selber oder durch den damit verbundenen größeren Bedarf an Sinterhilfsmitteln (im Falle des Siliciumnitrids z.B. $Y_2O_3$) die Hochtemperaturfestigkeit des keramischen Werkstoffes negativ beeinflußt wird.

In der Literatur (W.R. Cannon et al., J. Am. Ceram. Soc. 65, 7 (1982), Seiten 324 - 335) ist ein Verfahren beschrieben, bei dem die geschilderten Probleme nicht auftreten sollen. Hiernach wird feinteiliges Silicium- bzw. Siliciumnitrid-Pulver aus $SiH_4$ bzw. $SiH_4/NH_3$-Gemischen unter vermindertem Druck durch Erhitzen mittels eines Laser-Strahles hergestellt. Abgesehen von den Risiken, die mit dem Umgang mit größeren Mengen an Silan verbunden sind, ist eine Realisierung im technischen Maßstab wegen des außerordentlich hohen Energieverbrauchs kaum vorstellbar.

Der vorliegenden Erfindung lag somit die Aufgabe zugrunde, ein technisch durchführbares Verfahren zur Herstellung von Feinstpulvern aus möglichst reinem Silicium, Siliciumcarbid oder Siliciumnitrid zu entwickeln, welches die vorgenannten Nachteile nicht besitzt.

Dieses Ziel wird erfindungsgemäß dadurch erreicht, daß zunächst elementares, stückiges oder pulverförmiges (10 -100 μm Korndurchmesser) Silicium mit einer BET-Oberfläche bis 0,5 $m^2$/g mit Siliciumtetrachlorid im Überschuß bei Temperaturen oberhalb 1100° C, bevorzugt oberhalb 1200° C, zur Reaktion gebracht wird, wobei sich gasförmiges Siliciumdichlorid ($SiCl_2$) bildet. Anschließend kühlt man das aus $SiCl_2$ und überschüssigem $SiCl_4$ bestehende Gasmenge in bestimmter Weise auf Temperaturen unterhalb 600° C ab, wobei in Umkehrung der Bildungsreaktion das $SiCl_2$ in $SiCl_4$ und Si disproportioniert. Diese Reaktion ist im Prinzip in der Literatur (Harald Schäfer, "Chemische Transportreaktionen" Verlag Chemie 1962, S. 42-44) als Transportreaktion zur Bildung von wohlausgebildeten, langen Nadeln von elementarem Silicium beschrieben. Hierbei finden sich widersprüchliche Temperaturangaben. Während für die allgemeine Reaktion Si + $SiX_4$ ⇌ 2 $SiX_2$ (X = F, Cl, Br, I) ein Temperaturabfall von 1100→ 900° C verzeichnet ist, wird für die speziell hier interessierende Reaktion Si + $SiCl_4$ ⇌ 2 $SiCl_2$ ein Temperaturabfall von 1300→1100° C angegeben. Bei einem wesentlich stärken Temperaturgefälle kann nach Schäfer, loc. cit., bei offener Strömungsanordnung ein bedeutender Anteil des in der heißen Zone entstandenen $SiCl_2$ ohne Disproportionierung in kältere Zonen gelangen, wo es sich mit $SiCl_4$ zu Polychloriden der Formel $Si_nCl_{2n+2}$ verbindet. Überraschenderweise läßt sich die Umsetzung Si + $SiCl_4$ ⇌ 2 $SiCl_2$ jedoch auch zur Herstellung von feinstteiligem Silicium nutzen (Korndurchmesser < 1 μm).

Im einzelnen betrifft die Erfindung nunmehr ein Verfahren zur Herstellung von Silicium bestimmter Partikelform durch Umsetzung von Silicium mit gasförmigem Siliciumtetrachlorid bei hohen Temperaturen zu Siliciumdichlorid und dessen Disproportionierung bei niedrigeren Temperaturen zu Silicium bestimmter Partikelform und Siliciumtetrachlorid, welches dadurch gekennzeichnet ist, daß man zur Herstellung feinstteiligen Siliciums einer Korngröße < 1 μm und einer BET-Oberfläche > 10 $m^2$/g pulverförmiges oder stückiges Silicium bei Temperaturen oberhalb 1100° C mit Siliciumtetrachlorid im Überschuß umsetzt und das gasförmige Reaktionsgemisch möglichst rasch bis auf 900° C und von da ab ohne Haltepunkt unter Einhaltung einer Verweilzeit von 5 bis 100 s bis auf 600° C abkühlt, wobei das entstandene Siliciumdichlorid zu dem gewünschten feinstteiligen Silicium und Siliciumtetrachlorid disproportioniert. Die Verweilzeit ist hierbei auf ein für 20° C und 1 bar berechnetes Volumen des gasförmigen Reaktionsgemischs bezogen.

Darüber hinaus kann das Verfahren der Erfindung wahlweise und bevorzugt dadurch gekennzeichnet sein, daß

a) man das pulverförmige oder stückige Silicium bei Temperaturen von 1200 - 1400°C mit Siliciumtetrachlorid im Überschuß umsetzt.

b) beim Abkühlvorgang der Temperaturbereich zwischen 900 und 600°C unter Einhaltung einer Verweilzeit von 10 bis 30 s durchlaufen wird.

c) man die Umsetzung in einer senkrecht angeordneten, beheizten, mit pulverförmigem oder stückigem Silicium beschickten Strömungszone durchführt, wobei man das Siliciumtetrachlorid im Überschuß von unten einleitet.

d) man die Abkühlung des Reaktionsgemisches in Gegenwart von Stickstoff vornimmt.

Das erfindungsgemäß erhaltene feinstteilige Silicium kann zur Herstellung von Siliciumverbindungen in feinstteiliger Form eingesetzt werden (vgl. Preparation and Properties of Solid State Materials, Vol. 7, Growth Mechanisms and Silicon Nitride, edited by W.R. Wilcox, Marcel Dekker Inc. , New York 1982, bes. Seite 131 ff. und W.R. Cannon et al. , loc. cit.) . Auf diese Weise ist die Herstellung von Siliciumnitrid ($Si_3N_4$) in feinstteiliger Form dadurch gekennzeichnet, daß man das erhaltene feinstteilige Silicium in an sich bekannter Weise bei Temperaturen von 1300 bis 1500°C mit Stickstoff umsetzt. Ebenso ist die Herstellung von Siliciumcarbid (SiC) in feinstteiliger Form dadurch gekennzeichnet, daß man das erhaltene feinstteilige Silicium in an sich bekannter Weise bei hohen Temperaturen mit Kohlenwasserstoff umsetzt.

Das bei der Rückreaktion entstandene $SiCl_4$ kann in die Stufe der $SiCl_2$-Bildung zurückgeführt werden, so daß sich eine Art Kreisprozeß zur Erzeugung eines feinstteiligen Siliciums aus gröberen Partikeln ergibt. Man kann die Rückreaktion jedoch auch in Gegenwart von Stickstoff ablaufen lassen, so daß sich die feinstteiligen Siliciumpartikel mit einer Nitridhaut überziehen und dadurch vor dem Angriff von Sauerstoff geschützt sind.

Das gebildete feinstteilige Silicium kann entweder in de n Apparatur in bekannter Weise mit z.B. Stickstoff zu Siliciumnitrid oder mit gasförmigen Kohlenwasserstoffverbindungen wie Methan, Ethylen zu Siliciumcarbid umgesetzt werden, oder man führt diese Reaktionen in einem gesonderten Schritt durch. In jedem Fall bleibt die hohe Teilchenfeinheit des Siliciums erhalten.

Beispiel 1

In einem senkrecht angeordneten Quarzrohr (Innendurchmesser: 45 mm, Länge 80 cm) mit eingeschmolzener Fritte wurden 40 g Siliciumpulver mit Hilfe eines Rohrofens auf 1230°C erhitzt (Kornverteilung: 22 % 60 - 100 μm 22% 30 - 60 μm; 56 % < 30 μm; BET-Oberfläche < 0,1 m²/g). In einem Rundkolben wurde $SiCl_4$ zum Sieden erhitzt (57°C) und im Argonstrom (20 l/h) unter Einhaltung einer Verdampfungsrate von 5,2 g/min während 5,5 Stunden von unten durch das Quarzrohr geleitet. Oberhalb der Siliciumpulver-Schüttung fiel die Temperatur über eine Strecke von 35 cm von 1210°C auf 600°C ab, innerhalb welcher der Temperaturabfall von 900°C auf 600°C über eine Länge von 20 cm erfolgte. Während der Reaktion wurden 21 g Siliciumpulver durch Reaktion mit $SiCl_4$ umgesetzt. In der Zone oberhalb 900°C hatte sich keinerlei Feststoff abgeschieden, während die Quarzwand in der Zone von 900 bis 600°C mit einer Schicht elementaren, kompakten Siliciums belegt war. Die Verweilzeit in dieser Zone betrug 18 s. Neben diesem kompakten Silicium hatten sich in dem nach oben anschließenden, kälteren Teil (< 600°C) des Quarzrohrs und in nachgeschalteten Kühlfallen 11,0 g des gewünschten, feinstteiligen Siliciumpulvers abgeschieden (mittlerer Korndurchmesser 0,1 μm; BET-Oberfläche 22 m²/g). Dieses Pulver wurde anschließend bei 1400°C mit Stickstoff zur Reaktion gebracht. Das resultierende Produkt bestand röntgenographisch ausschließlich aus $Si_3N_4$ und hatte eine BET-Oberfläche von 19 m²/g.

Beispiel 2

Beispiel 1 wurde mit den folgenden Änderungen wiederholt: Die Umsetzung des Siliciumpulvers wurde bei 1380°C durchgeführt. Es wurden 4 g/min $SiCl_4$ mit einer Bürette in einen Rundkolben getropft, der eine Innentemperatur von 100°C aufwies. Der dabei gebildete $SiCl_4$-Dampf wurde im $N_2$-Strom (50 l/h) während 3,5 Stunden durch das Quarzrohr geleitet. Dabei wurden 21,5 g Silicium umgesetzt. Die Länge der 900°C bis 600°C heißen Zone betrug 14 cm. In dieser Zone erfolgte die Abscheidung des kompakten Siliciums. Die Verweilzeit in dieser Zone betrug 10 s. Aus dem nach oben anschließenden kälteren Teil des Quarzrohrs wurden 7,0 g des gewünschten, feinstteiligen Siliciums mit einem mittleren Korndurchmesser von 0,1 μm und einer BET-Oberfläche von 26 m²/g isoliert.

Beispiel 3

Beispiel 1 wurde mit der Änderung wiederholt, daß während 6 Stunden 0,5 g/min $SiCl_4$ mit Hilfe einer Bürette in einem auf 100°C erhitzten Rundkolben dosiert wurden, woraufhin das sofort verdampfende $SiCl_4$ mittels eines Argonstroms (10 l/h) durch das Quarzrohr geleitet wurde. Dabei wurden 9 g Silicium umgesetzt. Die 900°C bis 600°C heiße Zone des Quarzrohrs war 22 cm lang; in ihr schieden sich vergleichsweise große Mengen kompakten Siliciums ab. Die Verweilzeit in dieser Zone betrug 90 s. Aus dem nach oben anschließenden kälteren Teil des Quarzrohrs wurde 1 g des gewünschten, feinstteiligen Siliciumpulvers mit einem mittleren Korndurchmesser von 0,6 $\mu$m und einer BET-Oberfläche von 12 m²/g gewonnen.

Beispiel 4 (Vergleichsbeispiel)

Beispiel 1 wurde mit der Änderung wiederholt, daß während 3,5 Stunden 3 g/min SiCl$_4$ mit Hilfe einer Bürette in einem auf 100°C erhitzten Rundkolben dosiert wurden, woraufhin das sofort verdampfte SiCl$_4$ mit Hilfe eine N$_2$-Stroms (240 l/h) durch das Quarzrohr geleitet wurde. Dabei wurden 22 g Silicium umgesetzt. Zusätzlich war der Rohrquerschnitt oberhalb der Fritte durch Einsatz eines Schutzrohrs aus Aluminiumoxid-Keramik (Innendurchmesser 30 mm) verengt worden. In der 900°C bis 600°C heißen Zone des Quarzrohrs schied sich nur sehr wenig elementares Silicium ab. Statt dessen wurden in dem nach oben anschließenden, kälteren Teil des Reaktionsrohrs schwerflüchtige polymere Siliciumchloride gefunden. Die Verweilzeit in der 900°C bis 600°C heißen Zone, welche 25 cm lang war, betrug 2 s. Insgesamt wurde nur 1 g Siliciumpulver mit einem mittleren Korndurchmesser von 0,1 $\mu$m und einer BET-Oberfläche von 25 m²/g gewonnen.

## Ansprüche

1. Verfahren zur Herstellung von Silicium bestimmter Partikelform durch Umsetzung von Silicium mit gasförmigem Siliciumtetrachlorid bei Temperaturen oberhalb 1100°C zu Siliciumdichlorid und dessen Disproportionierung bei niedrigeren Temperaturen zu Silicium bestimmter Partikelform und Siliciumtetrachlorid, dadurch gekennzeichnet, daß man zur Herstellung feinstteiligen Siliciums einer Krongröße < 1 um und einer BET-Oberfläche > 10 m /g pulverförmiges oder stückiges Silicium mit Siliciumtetrachlorid im Überschuß umsetzt und das gasförmige Reaktionsgemisch möglichst rasch bis auf 900°C und von da ab ohne Haltepunkt unter Einhaltung einer Verweilzeit von 5 bis 100 s bis auf 600°C abkühlt, wobei das entstandene Siliciumdichlorid zu dem gewünschten feinstteiligen Silicium und Siliciumtetrachlorid disproportioniert.

2. Verfahren nach Anspruch 1, dadurch gekennzeichnet, daß man das pulverförmige oder stückige Silicium bei Temperaturen von 1200 - 1400°C mit Siliciumtetrachlorid im Überschuß umsetzt.

3. Verfahren nach mindestens einem der Ansprüche 1 und 2, dadurch gekennzeichnet, daß beim Abkühlvorgang der Temperaturbereich zwischen 900 und 600°C unter Einhaltung einer Verweilzeit von 10 bis 30 s durchlaufen wird.

4. Verfahren nach mindestens einem der vorhergehenden Ansprüche, dadurch gekennzeichnet, daß man die Umsetzung in einer senkrecht angeordneten, beheizten, mit pulverförmigem oder stückigem Silicium beschickten Strömungszone durchführt, wobei man das Siliciumtetrachlorid im Überschuß von unten einleitet.

5. Verfahren nach mindestens einem der vorhergehenden Ansprüche, dadurch gekennzeichnet, daß man die Abkühlung des Reaktionsgemisches in Gegenwart von Stickstoff vornimmt.

## Claims

1. A process for producing silicon of defined particle shape by reacting silicon with gaseous silicon tetrachloride at temperatures above 1100°C to give silicon dichloride and disproportionating the latter at lower temperatures to give silicon of defined particle shape and silicon tetrachloride, which comprises, for producing extremely finely disperse silicon of grain size of <1 $\mu$m and a BET surface area of >10 m²/g, reacting pulverulent or lumpy silicon with excess silicon tetrachloride and cooling the gaseous reaction mixture as rapidly as possible down to 900°C and from there without a holding point down to 600°C, while maintaining a residence time of from 5 to 100 seconds, the resulting silicon dichloride disproportionating to give the desired extremely finely disperse silicon and silicon tetrachloride.

2. The process as claimed in Claim 1, wherein the pulverulent or lumpy silicon is reacted with excess silicon tetrachloride at temperatures of 1200 - 1400°C.

3. The process as claimed in at least one of claims 1 and 2, wherein the cooling step passes through the temperature range between 900 and 600°C while maintaining a residence time of from 10 to 30 seconds.

4. The process as claimed in at least one of the preceding claims, wherein the reaction is carried out in a vertically arranged, heated flow zone charged with pulverulent or lumpy silicon, the excess silicon tetrachloride being introduced from below.

5.  The process as claimed in at least one of the preceding claims, wherein the cooling of the reaction mixture is carried out in the presence of nitrogen.

**Revendications**

1.  Procédé pour la fabrication de silicium d'une certaine forme de particules par réaction du silicium avec le tétrachlorure de silicium gazeux à des températures de plus de 1100°C en dichlorure de silicium et sa dismutation à températures plus basses en silicium d'une certaine forme de particules et en tétrachlorure de silicium, caractérisé en ce que, pour la fabrication de silicium en très fines particules d'une grosseur de grains < 1 $\mu$m et d'une surface spécifique BET > 10 m$^2$/g, en fait réagir du silicium en poudre ou en morceaux avec le tétrachlorure de silicium en excès et on refroidit le plus rapidement possible le mélange de réaction gazeux jusqu'à 900°C et de là jusqu'à 600°C sans arrêt en observant une durée de passage de 5 à 100 s, le dichlorure de silicium formé étant dismuté en le silicium en très fines particules désiré et en tétrachlorure de silicium.

2.  Procédé selon la revendication 1, caractérisé en ce que l'on fait réagir le silicium en poudre ou en morceaux avec le tétrachlorure de silicium en excès à des températures de 1200-1400°C.

3.  Procédé selon l'une au moins des revendications 1 et 2, caractérisé en ce que, dans le processus de refroidissement, le domaine de températures entre 900 et 600°C est parcouru en observant une durée de séjour de 10 à 30 s.

4.  Procédé selon l'une au moins des revendications précédentes, caractérisé en ce que l'on met en oeuvre la réaction dans une zone de circulation verticale, chauffée, chargée de silicium en poudre ou en morceaux, en introduisant le tétrachlorure de silicium en excès par le bas.

5.  Procédé selon l'une au moins des revendications précédentes, caractérisé en ce que l'on effectue le refroidissement du mélange de réaction en présence d'azote.